Europäisches Patentamt

European Patent Office

Office européen des brevets

(19)

(11) Numéro de publication : **0 084 988**
**B1**

(12) **FASCICULE DE BREVET EUROPÉEN**

(45) Date de publication du fascicule du brevet :
09.07.86

(51) Int. Cl.⁴ : **G 21 C   5/06**, G 21 C   3/32

(21) Numéro de dépôt : **83400052.3**

(22) Date de dépôt : **10.01.83**

(54) **Pièce d'extrémité d'assemblage combustible de réacteur nucléaire comportant un levier rigide rappelé élastiquement.**

(30) Priorité : **18.01.82 FR 8200673**

(43) Date de publication de la demande :
**03.08.83 Bulletin 83/31**

(45) Mention de la délivrance du brevet :
**09.07.86 Bulletin 86/28**

(84) Etats contractants désignés :
**BE DE GB IT NL**

(56) Documents cités :
**DE-A- 1 439 936**
**FR-A- 2 326 010**
**FR-A- 2 442 491**
**GB-A- 1 159 971**
**US-A- 4 072 564**
**US-A- 4 134 790**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Feutrel, Claude**
**105 Grande Rue**
**F-91430 Vauhallan (FR)**

(74) Mandataire : **Mongrédien, André et al**
**c/o BREVATOME 25, rue de Ponthieu**
**F-75008 Paris (FR)**

EP 0 084 988 B1

## Description

La présente invention concerne un dispositif de maintien d'un assemblage combustible de réacteur nucléaire comportant un levier rigide rappelé élastiquement.

Les assemblages combustibles de réacteur nucléaire refroidi à l'eau sont généralement constitués de pièces d'extrémités rigides, une pièce d'extrémité inférieure et une pièce d'extrémité supérieure, fixées à chaque extrémité de tubes guides rigides. Sur les tubes guides sont disposées plusieurs grilles d'espacement qui maintiennent un faisceau de crayons combustibles.

Des assemblages de ce type sont disposés, lorsqu'ils sont en place dans le cœur du réacteur, entre une plaque supérieure et une plaque inférieure qui font partie de la charpente aménagée dans la cuve du réacteur. Ils sont balayés longitudinalement de bas en haut par un courant d'eau de réfrigération. La différence entre les coefficients de dilatation thermique des matériaux utilisés dans la structure du réacteur nucléaire interdisent la fixation rigide des assemblages combustibles sur les plaques inférieure et supérieure de la charpente du cœur.

C'est pourquoi, de façon classique, on interpose entre chaque assemblage et l'une des plaques de cœur, la plaque supérieure en général, un élément élastique de fixation qui repousse l'assemblage contre la plaque opposée.

Cependant, un problème important qui se pose est la rupture de l'élément élastique de fixation. En effet, en cas de rupture, la partie rompue de cet élément serait entraînée par le fluide caloporteur et causerait des dégâts dans le circuit de l'eau de refroidissement. Des solutions ont été proposées pour remédier à ce problème. Par exemple, le FR-A-2 326 010 concerne une pièce d'extrémité d'assemblage combustible qui comporte des ressorts combinés de flexion et de torsion montés dans la pièce d'extrémité de l'assemblage. Cette pièce d'extrémité comprend une base et quatre pièces de poussée fixées par des boulons sur cette base. Quatre ressorts s'appliquent sur une plaque supérieure de cœur lorsque l'assemblage est en place dans le cœur du réacteur. Chaque ressort est constitué de trois parties, à savoir un premier bras de flexion retenu dans une cavité, un élément de torsion et un second bras de flexion dont une extrémité est coudée de 90° et qui se termine par un plat produit par un refoulement de matière. Ce plat prend appui contre des pièces de poussée solidaires de la plaque supérieure de cœur.

Le bras de torsion, qui est le plus susceptible de rompre, est recouvert par une tôle de protection destinée à empêcher les morceaux de ressort cassés de parvenir dans le circuit primaire du fluide de refroidissement. Dans le même but, le second bras de flexion est terminé par un refoulement de matière qui se déplace dans une boutonnière de guidage.

On voit que, dans ce dispositif, le problème de la rupture d'un ressort a été envisagé et que l'on a proposé une solution pour éviter qu'une partie rompue de ce ressort puisse être entraînée dans le fluide caloporteur et provoquer des dégâts dans le circuit de l'eau de refroidissement. Cependant, si la partie du ressort qui travaille en torsion et qui est la plus susceptible de se rompre a été recouverte par une tôle de protection, un autre point faible subsiste à la base du second levier de flexion. En effet cette partie, de section constante, travaille à la fois en flexion et en torsion, et d'autre part la contrainte de flexion y est maximale, car elle est située à distance maximale du point par lequel est transmis l'effort du ressort. Enfin, elle est courbée, ce qui contribue encore à l'affaiblir.

Une rupture est donc possible au niveau de la base du second bras de torsion. Ce second bras serait alors entraîné par le fluide de refroidissement et pourrait même sortir de la boutonnière sous l'effet de son agitation dans le fluide de refroidissement.

Même si la partie rompue du bras de flexion reste maintenue dans la boutonnière par le refoulement de matière, son débattement risque néanmoins de provoquer des dégâts.

On connaît également (US-A-4 072 564) un dispositif pour limiter le déplacement longitudinal d'un assemblage combustible de réacteur nucléaire. Une pièce d'extrémité de section carrée comporte des barres de torsion. Sur chaque barre de torsion on trouve un levier rigide, disposé au centre de la barre, perpendiculairement à celle-ci, et qui exerce une action élastique sur un bloc solidaire d'une plaque de support qui fait partie de la structure du réacteur.

Dans ce dispositif, les barres de torsion ne sont pas contenues dans des logements ménagés dans les côtés du cadre de la pièce d'extrémité. En outre, la barre de torsion est soumise à un effort de flexion important du fait qu'elle est immobilisée à ses deux extrémités et que les leviers sont situés au centre de chaque barre. La rupture d'une barre de torsion est donc possible et, dans ce cas, la partie rompue serait entraînée par le fluide caloporteur, ce qui causerait des dégâts dans le circuit de l'eau de refroidissement.

L'invention a pour objet un dispositif de maintien d'un assemblage combustible de réacteur nucléaire comportant une pièce d'extrémité contre une plaque supérieure du cœur du réacteur qui comporte un élément élastique de fixation qui remédie à cet inconvénient.

Cet élément est caractérisé par le fait qu'il est composé d'une part d'un levier rigide, et d'autre part de moyens élastiques contenus dans un logement qui exercent un couple de rappel sur le levier rigide. On a séparé les moyens élastiques, qui donnent naissance à l'effort de rappel, des moyens qui transmettent cet effort à la plaque de grille du cœur. Les contraintes qui existent dans le levier sont suffisamment faibles pour que ce dernier ne soit pas susceptible de se rompre. Les moyens élastiques, dont la rupture est possible, sont, eux, enfermés dans un logement, si bien qu'aucune pièce rompue ne peut s'échapper dans le fluide caloporteur.

Plus précisément, le dispositif de maintien est constitué par une pluralité de leviers rigides, chaque levier étant articulé sur un axe A et possédant une première extrémité s'appuyant en service contre la plaque supérieure de cœur et une seconde extrémité reliée à l'un des moyens élastiques, les moyens élastiques exerçant un couple de rappel sur le levier correspondant.

De préférence, la section des leviers est décroissante de l'axe d'articulation A vers chacune des extrémités, et elle est déterminée de telle sorte que les contraintes qui existent dans ces leviers soient constantes. Ainsi, ces leviers ne présentent aucun point faible.

Selon un premier mode particulier de réalisation, les moyens élastiques sont constitués par :

une tige possédant une première extrémité et une seconde extrémité reliée par sa première extrémité de manière pivotante à l'extrémité libre du levier,

des éléments élastiques à forte raideur enfilés autour de la tige,

un organe d'arrêt immobilisé en translation à la deuxième extrémité de la tige,

le logement présentant, du côté de la première extrémité un épaulement sur lequel les éléments élastiques à forte rigidité prennent appui.

Cette réalisation présente l'avantage de permettre d'ajuster la précontrainte des éléments élastiques en agissant sur la position de l'organe d'arrêt. A cet effet, ledit organe d'arrêt est par exemple un écrou de réglage vissé sur ladite tige.

Selon un second mode particulier de réalisation, le levier comporte une denture d'engrenage inclinée à sa seconde extrémité et les moyens élastiques sont constitués par une barre de torsion présentant une première extrémité et une seconde extrémité et comportant à sa première extrémité un secteur denté à denture inclinée complémentaire de la denture du levier et qui engrène avec elle, la barre étant immobilisée en rotation à sa seconde extrémité par rapport audit cadre, la partie extrême de la première extrémité tournant dans un palier ménagé dans ce même cadre.

On remarque l'existence dans les moyens élastiques de contraintes par effet de compression dans le cas du premier mode de réalisation et de contraintes par effet de torsion dans le cas du second mode de réalisation.

D'autres caractéristiques et avantages de l'invention apparaîtront encore dans la description qui suit, faite en regard des dessins annexés à titre d'exemple nullement limitatif, et sur lesquels :

la figure 1 représente le schéma d'implantation des assemblages combustibles dans le cœur d'un réacteur nucléaire à eau,

la figure 2 représente une vue en coupe longitudinale d'un assemblage de réacteur nucléaire montrant un premier mode de réalisation de l'invention,

la figure 3 représente une vue en coupe à échelle agrandie d'un assemblage combustible de réacteur nucléaire montrant un second mode de réalisation de l'invention,

la figure 4 représente une coupe selon l'axe 4-4 de la figure 3 et montrant une vue de détail de l'extrémité des barres de torsion constituant les éléments élastiques du mode de réalisation représenté sur la figure 3,

la figure 5 représente une vue de dessus de l'assemblage des figures 3 et 4.

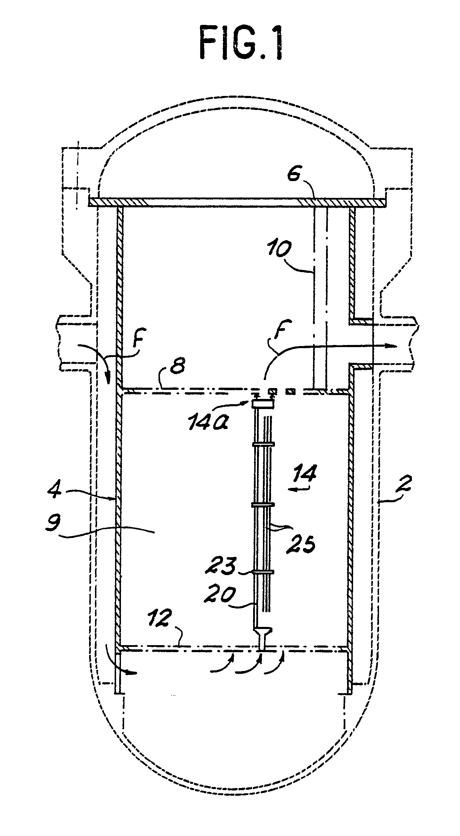

Sur la figure 1, on a représenté la disposition générale connue des assemblages combustibles d'un réacteur à eau dont la cuve est référencée 2. Les équipements internes 4 sont suspendus à l'intérieur de la cuve 2. Ils se composent d'équipements internes supérieurs, constitués par une plaque supérieure 6 et une plaque inférieure 8, ci-après dénommée plaque supérieure de cœur, reliées entre elles par des entretoises 10, et d'équipements internes inférieurs constitués par une plaque inférieure 12. Les assemblages combustibles tels que l'assemblage 14 formant le cœur 9 du réacteur nucléaire, sont disposés entre les plaques 8 et 12.

Un courant d'eau de refroidissement circule selon le sens des flèches f, et balaye les assemblages combustibles 14 de bas en haut.

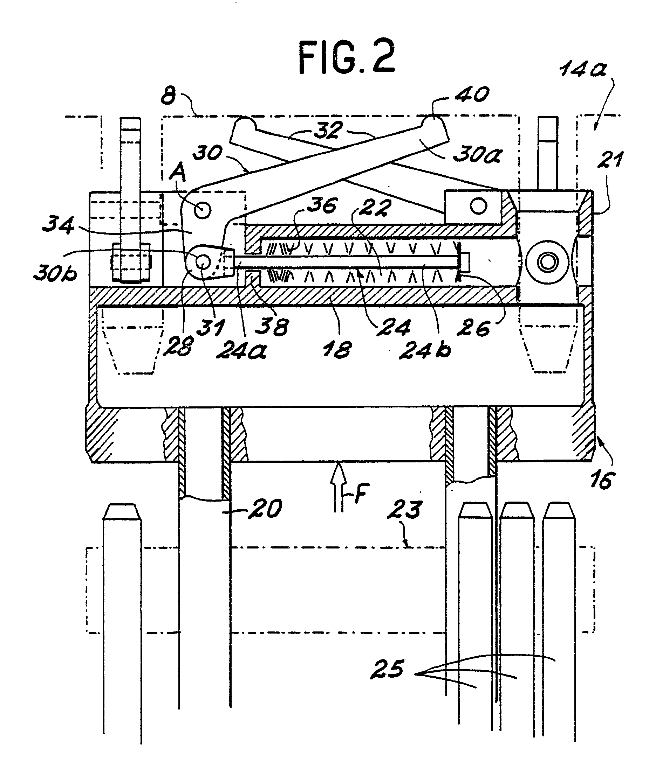

Comme on peut le voir plus en détail sur la figure 2, un assemblage combustible tel que l'assemblage 14 se compose d'une pièce d'extrémité supérieure 16, d'une pièce d'extrémité inférieure non représentée, les pièces d'extrémités étant reliées entre elles de manière rigide par des tubes guides 20 dont deux seulement ont été représentés sur la figure 2 afin de ne pas surcharger le dessin. Sur les tubes-guides 20 sont fixées des grilles d'espacement comme la grille 23, représentée en trait mixte, qui maintiennent les éléments ou crayons combustibles 25 en un faisceau parallèle.

En raison des différences entre les coefficients de dilatation des matériaux en lesquels sont réalisés, d'une part les assemblages combustibles 14, et d'autre part les structures internes de la cuve, il est impossible de fixer de façon rigide les assemblages sur les plaques supérieure 8 de cœur et inférieure 12. On laisse donc un jeu soit entre la partie supérieure de l'assemblage 14 et la plaque 8, soit éventuellement entre la partie inférieure de cet assemblage et la plaque 12. A l'autre extrémité de l'assemblage combustible, on dispose un élément élastique qui a pour but de plaquer l'assemblage contre la plaque opposée. L'invention concerne précisément un élément élastique de ce type dans lequel on a séparé la fonction élastique qui donne naissance à l'effort nécessaire pour plaquer l'assemblage des moyens pour transmettre cet effort. Un premier mode de réalisation de l'invention est représenté sur la figure 2.

La pièce d'extrémité supérieure 16 comporte une plaque 18 à laquelle sont fixés les tubes guides 20. Elle comporte également un cadre carré 21, à l'intérieur des côtés duquel sont pratiqués des logements horizontaux 22, et qui est fixé à la plaque 18. Une tige 24 est disposée à l'intérieur de chaque logement 22. A l'une de ses extrémités, l'extrémité 24b, la tige 24 comporte un écrou d'arrêt 26 immobilisé en translation. A son autre extrémité, l'extrémité 24a, elle est fixée une chape 28.

Un levier 30 pivote autour d'un axe horizontal A par rapport au cadre carré 21. Le levier 30 possède un premier bras de levier 32 et un second bras de levier 34. Comme on le constate, la longueur du bras de levier 32 est plusieurs fois supérieure à celle du bras de levier 34. La chape 28 est articulée au bras de levier 34 par un axe 31. Des éléments élastiques présentant une forte raideur, comme par exemple des rondelles Belleville 36, sont enfilés sur la tige 24. Elles prennent appui sur l'écrou d'arrêt 26, et à l'autre extrémité, sur un épaulement 38 du logement 22.

La partie extrême du bras de levier 32 est terminée par un bossage arrondi 40. C'est ce bossage 40 qui prend appui, dans l'exemple de réalisation représenté, sur la plaque supérieure de coeur 8, indiquée en traits mixtes, lorsque l'assemblage combustible est en place. Quatre dispositifs analogues sont disposés sur chacun des quatre côtés du cadre carré 21 comme on peut le voir sur la figure 2. Sur cette figure, on aperçoit deux leviers 32 vus de profil et deux autres vus en bout.

Il est évident que le dispositif élastique qui vient d'être décrit pourrait également être disposé à la partie inférieure de l'assemblage combustible. Ceci impliquerait évidemment un dimensionnement convenable, afin de prendre en compte le poids de l'assemblage combustible. Dans ce cas, le bossage 40 prendrait appui sur la plaque inférieure de coeur 12.

Cette réalisation du dispositif de maintien élastique de l'assemblage permet, en cas de rupture de la tige 24 ou d'une rondelle élastique du type Belleville 36, d'empêcher qu'aucune pièce ne s'échappe dans le circuit de refroidissement primaire. En effet ces pièces restent enfermées à l'intérieur du logement 22.

Quant au levier 30, sa section a été calculée de manière que les contraintes soient bien inférieures à celles qui existent dans les rondelles 36 ou la tige 24. En outre, comme on le remarque, sa section est plus importante quand on se rapproche de l'axe A, où les contraintes de flexion sont plus importantes. Les contraintes dans le levier 30 sont donc faibles et constantes, de sorte que sa rupture est improbable et sa flèche négligeable.

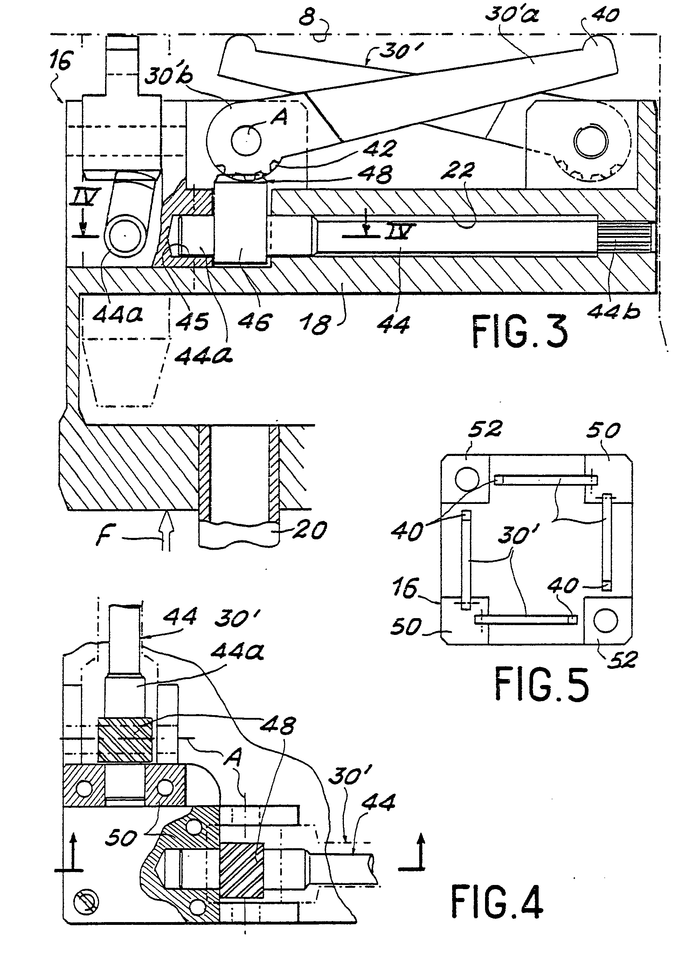

On a représenté, sur les figures 3 à 5, un deuxième mode de réalisation du dispositif de maintien élastique conforme à l'invention.

La figure 3 représente la partie supérieure d'un assemblage combustible 14 représentée à plus grande échelle que la figure 2. On reconnaît sur cette figure un tube-guide 20, la plaque 18, le cadre carré 21 et le logement 22 pratiqué dans ce cadre carré 21, ainsi que le levier 30'.

Le levier 30' pivote autour d'un axe horizontal A disposé à son extrémité 30'b. Sur cette extrémité 30'b est taillée une denture 42 inclinée à 45°. A son autre extrémité 30'a, il comporte un bossage 40.

A l'intérieur du logement 22, on trouve une barre de torsion 44 dont l'extrémité cannelée 44b est immobilisée en rotation par rapport au cadre carré 21. A son autre extrémité 44a, la barre de torsion 44 peut pivoter librement à l'intérieur d'un alésage borgne 45 pratiqué dans le cadre carré 21. Cet alésage évite que la barre de torsion soit en porte-à-faux. A cette même extrémité 44a, on trouve un secteur 46 solidaire de la barre de torsion 44 et sur lequel est taillée une denture d'engrenages 48 qui engrène avec la denture d'engrenages 42 pratiquée à l'extrémité 30'b du levier.

La barre de torsion 44 exerce ainsi un couple qui permet de rappeler vers le haut le levier 30' ; quatre de ces leviers sont disposés sur la pièce d'extrémité 16 ; ils exercent ainsi un effort de maintien par l'intermédiaire des bossages 40 sur la plaque supérieure de coeur 8 (non représenté sur la figure 3).

La figure 4 montre les extrémités 44a de deux barres de torsion. Les extrémités 44a sont montées chacune dans un palier 50 démontable. Les barres sont montées deux à deux afin de permettre l'implantation des pions de centrage 52 dans les coins laissés libres.

**Revendications**

1. Dispositif de maintien d'un assemblage combustible de réacteur nucléaire comportant une pièce d'extrémité contre une plaque supérieure (8) du cœur du réacteur, une pluralité de logements fermés étant ménagés dans les côtés d'un cadre de la pièce d'extrémité, ces logements contenant des moyens élastiques, caractérisé en ce qu'il est constitué par : — une pluralité de leviers rigides (30), chaque levier étant articulé sur un axe (A) et possédant une première extrémité (30a, 30'a) s'appuyant en service contre la plaque supérieure de cœur (8), et une seconde extrémité (30b, 30'b) reliée à l'un des moyens élastiques (36, 44), les moyens élastiques exerçant un couple de rappel sur le levier (30) correspondant.

2. Dispositif de maintien selon la revendication 1, caractérisé en ce que la section des leviers rigides (30) est décroissante de l'axe (A) vers chacune des extrémités (30a, 30b, (fig. 2) ; 30'a, 30'b (fig. 3)).

3. Dispositif de maintien selon la revendication 2, caractérisé en ce que ladite section est déterminée de telle sorte que les contraintes qui existent dans ces leviers soient constantes.

4. Dispositif de maintien selon l'une quelconque des revendications 1 à 3, caractérisé en ce que lesdits moyens élastiques sont constitués par :

une tige (24) possédant une première extrémité (24a) et une seconde extrémité (24b), reliée par sa première extrémité (24a) de manière pivotante à l'extrémité libre (30b) du levier (30) ;

des éléments élastiques à forte raideur (36) enfilés autour de la tige (24) ;

un organe d'arrêt (26) immobilisé en translation à la seconde extrémité (24b) de la tige (24) ;

le logement (22) présentant, du côté de la première extrémité (24a), un épaulement (38) sur lequel les éléments élastiques à forte rigidité (36) prennent appui.

5. Dispositif de maintien selon la revendication 4, caractérisé en ce que ledit organe d'arrêt (26) est réglable en position sur la tige (24) de manière à régler la précontrainte desdits éléments élastiques (36).

6. Dispositif de maintien selon la revendication 5, caractérisé en ce que ledit organe d'arrêt est un écrou (26) vissé sur la tige (24) et venant en appui sur lesdits éléments élastiques (36).

7. Dispositif de maintien selon l'une quelconque des revendications 4 à 6, caractérisé en ce que les éléments élastiques à forte raideur (36) sont des rondelles élastiques de type Belleville.

8. Dispositif de maintien selon la revendication 3, caractérisé en ce que le levier (30') comporte une denture d'engrenage inclinée (42) à sa seconde extrémité (30'b), lesdits moyens élastiques étant constitués par une barre de torsion (44) présentant une première extrémité (44a) et une seconde extrémité (44b), et comportant à sa première extrémité (44a) un secteur (46) denté à denture inclinée (48) complémentaire de la denture (42) du levier et qui engrène avec elle, la barre (44) étant immobilisée en rotation à sa seconde extrémité (44b) par rapport au cadre (21) de la pièce d'extrémité (16), la partie extrême de la première extrémité (44a) tournant dans un palier (45) ménagé dans le cadre (21) de la pièce d'extrémité (16).

**Claims**

1. A retaining device for a nuclear reactor fuel assembly, the device comprising an end member opposite a top plate (8) of the reactor core, the sides of a frame of the end member being formed with a number of closed recesses receiving resilient means, characterised in that the device comprises : a number of rigid levers (30) each pivoted on a pivot (A) and having a first end (30a, 30'a) bearing when in operation on the core top plate (8), a second end (30b, 30'b) of the lever (30) being connected to one of the resilient means (36, 44), the same applying a restoring torque to the corresponding lever (30).

2. A device according to claim 1, characterised in that the cross-section of the rigid levers (30) decreases from the pivot (A) towards each end (30a, 30b (Fig. 2) ; 30'a, 30'b (Fig. 3)).

3. A device according to claim 2, characterised in that the cross-section is so determined as to ensure a constant stressing of the levers.

4. A device according to any of claims 1-3, characterised in that the resilient means comprise :

a rod (24) having a first end (24a) and a second end (24b) and pivotally connected at its first end (24a) to the free end (30b) of the lever (30) ;

very rigid resilient elements (36) threaded around the rod (24) ;

a stop element (26) rigidly secured to the second end (24b) of the rod (24) ;

the recess (22) having on the side near the first end (24a) a shoulder (38) on which the very rigid resilient elements (36) bear.

5. A device according to claim 4, characterised in that the position of the stop element (26) on the rod is adjustable for adjustment of the prestressing of the resilient elements (36).

6. A device according to claim 5, characterised in that the stop element is a nut (26) screwed on the rod (24) and bearing on the resilient elements (36).

7. A device according to any of claims 4-6, characterised in that the very rigid resilient element (36) are resilient Belleville washers.

8. A device according to claim 3, characterised in that the lever (30') has skew gearing (42) at its second end (30'b), the resilient means being in the form of a torsion rod (44) having a first end (44a) and a second end (44b), the rod (44) having at its first end (44a) a toothed sector (46) having skew teeth (48) matching and meshing with the teeth (42) of the lever (30'), the rod (44) being secured in rotation at its second end (44b) relatively to the frame (21) of the end piece (16), the end part of the first end (44a) of the torsion rod (44) rotating in a bearing (45) contrived in the frame (21) of the end member (16).

**Patentansprüche**

1. Halteeinrichtung für ein Brennelement eines Kernreaktors, enthaltend ein Endstück an einer oberen Platte (8) des Reaktorkerns, eine Mehrzahl von verschlossenen Aufnahmen, die in den Seiten einer Einfassung des Endstücks ausgebildet sind, wobei die Aufnahmen elastische Einrichtungen enthalten, dadurch gekennzeichnet, daß sie gebildet ist durch : eine Mehrzahl von steifen Hebeln (30), wobei jeder Hebel an einer Achse (A) angelenkt ist und ein erstes Ende (30a, 30'a), das sich im Betrieb gegen die obere Platte des Kerns (8) anlegt, und ein zweites Ende (30b, 30'b) aufweist, das mit einer der elastischen Einrichtungen (36, 44) verbunden ist, wobei die elastischen Einrichtungen auf den entsprechenden Hebel (30) ein Rückführmoment ausüben.

2. Halteeinrichtung nach Anspruch 1, dadurch gekennzeichnet, daß der Querschnitt der steifen Hebel (30) von der Achse (A) gegen jedes der Enden (30a, 30b (Fig. 2) ; 30'a, 30'b (Fig. 3)) abnimmt.

3. Halteeinrichtung nach Anspruch 2, dadurch gekennzeichnet, daß der genannte Querschnitt so bestimmt ist, daß die in diesen Hebeln vorhandenen Belastungen konstant sind.

4. Halteeinrichtung nach einem der Ansprüche 1 bis 3, dadurch gekennzeichnet, daß die elastischen Einrichtungen gebildet sind durch :

eine Stange (24), die ein erstes Ende (24a) und ein zweites Ende (24b) aufweist, die mit ihrem ersten Ende (24a) schwenkbar am freien Ende (30b) des Hebels (30) angebracht ist ;

elastische Elemente (36) hoher Steifigkeit, die um die Stange (24) angeordnet sind ;

ein Abstützelement (26), das am zweiten Ende (24b) der Stange (24) gegen Verschiebung festgehalten ist ;

wobei die Aufnahme (22) auf seiten des ersten Endes (24a) eine Schulter (38) aufweist, an welcher sich die elastischen Elemente (36) hoher Steifigkeit abstützen.

5. Halteeinrichtung nach Anspruch 4, dadurch gekennzeichnet, daß das Abstützelement (26) in seiner Lage auf der Stange (24) so einstellbar ist, daß die Vorbelastung der genannten elastischen Elemente (36) einstellbar ist.

6. Halteeinrichtung nach Anspruch 5, dadurch gekennzeichnet, daß das genannte Abstützelement eine Mutter (26) ist, die auf die Stange (24) geschraubt ist und zur Anlage an die genannten elastischen Elemente (36) kommt.

7. Halteeinrichtung nach einem der Ansprüche 4 bis 6, dadurch gekennzeichnet, daß die elastischen Elemente (36) hoher Steifigkeit elastische Belleville-Ringe sind.

8. Halteeinrichtung nach Anspruch 3, dadurch gekennzeichnet, daß der Hebel (30') eine Schrägverzahnung (42) an seinem zweiten Ende (30'b) aufweist, daß die genannten elastischen Einrichtungen von einem Torsionsstab (44) gebildet sind, der ein erstes Ende (44a) und ein zweites Ende (44b) aufweist und an seinem ersten Ende (44a) einen Zahnsektor (46) mit schräger Verzahnung (48) komplementär zur Verzahnung (42) am Hebel aufweist und die in jene eingreift, wobei der Torsionsstab (44) an seinem zweiten Ende (44b) gegenüber der Einfassung (21) des Endstücks (16) gegen Verdrehung gesichert ist und der äußerste Abschnitt des ersten Endes (44a) sich in einem Lager (45) dreht, das in der Einfassung (21) des Endstücks (16) ausgebildet ist.

# FIG.1

# FIG.2

FIG.3

FIG.4

FIG.5